# EUROPEAN PATENT APPLICATION

(11) **EP 4 096 294 A1**
(43) Date of publication of application: **30.11.2022**
(21) Application number: 20920805.7
(22) Date of filing: 29.09.2020
(51) Int. Cl.: H04W 36/00

(54) **ROUTE ADVERTISING METHOD, NETWORK ELEMENTS, SYSTEM, AND DEVICE**

(30) Priority: 29.02.2020 CN 202010132858
(71) Applicant: Huawei Technologies Co., Ltd., Shenzhen, Guangdong 518129, (CN)
(72) Inventor: PENG, Tao, Shenzhen, Guangdong 518129 (CN); HUA, Rongrong, Shenzhen, Guangdong 518129 (CN); YU, Zhouyi, Shenzhen, Guangdong 518129 (CN)
(74) Representative: Gill Jennings & Every LLP
(86) International application number: PCT/CN2020/118689
(87) International publication number: WO 2021/169291

(57) **Abstract**

This application provides a method for advertising a route, applied to a layer 3 network in an open systems interconnection OSI model. The network includes a control plane network element and a user plane network element that are connected to each other, and the method includes: receiving, by the user plane network element, a packet whose source IP address is a first IP address; determining, by the user plane network element, that the first IP address is not authenticated; sending, by the user plane network element, an authentication request that includes the first IP address to the control plane network element; receiving, by the user plane network element, a first session from the control plane network element; and advertising, by the user plane network element, first routing information based on the first session, where a destination address of the first routing information is the first IP address. The method can ensure that in the layer 3 network in the OSI model, when switching between a plurality of APs or routers connected to different BNGs, user equipment cannot maintain a network connected state.

## Description

This application claims priority to Chinese Patent Application No. 202010132858.9, filed with the Chinese Patent Office on February, 29 2020 and entitled "METHOD FOR ADVERTISING ROUTE, NETWORK ELEMENT, SYSTEM, AND DEVICE", which is incorporated herein by reference in its entirety.

### TECHNICAL FIELD

This application relates to the communications field, and in particular, to a method for advertising a route, a network element, a system, and a device.

### BACKGROUND

With rapid development of network technologies in recent years, people are increasingly dependent on the network technologies. The internet has reached thousands of households. Almost all consumption places, such as shopping malls, restaurants, hotels, and coffee shops, provide wireless services for customers. Almost all places, such as homes, offices, and schools, provide wired services. Internet access has become an important part of most people's study, work, and life.

When a user uses a WLAN or a router to access a layer 3 network in an open systems interconnection (Open System Interconnection, OSI) model, a case of jumping between different network access points (Access Point, AP) or routers often occurs. However, in a layer 3 network in the current OSI model, it is generally possible to maintain a network connected state when a user switches between a plurality of APs or routers connected to a same broadband network gateway (Broadband Network Gateway, BNG). However, it is impossible to maintain the network connected state when the user switches between a plurality of APs or routers connected to different BNGs. For example, when the user switches from an AP 1 connected to a BNG 1 to an AP 2 connected to a BNG 2, a connection to the BNG 1 needs to be disconnected, and a dialup request is sent to the BNG 2. This process causes a short-time network disconnection for the user, which brings inconvenience to the user.

### SUMMARY

This application provides a method for advertising a route, a network element, a system, and a device, to ensure that in a layer 3 network in the OSI model, when switching between a plurality of APs or routers connected to different BNGs, user equipment cannot maintain a network connected state.

According to a first aspect, a method for advertising a route is provided, and is applied to a layer 3 network in an open systems interconnection OSI model. The network includes a control plane network element and a user plane network element that are connected to each other, and the method includes the following steps:
the user plane network element receives a packet, where a source IP address of the packet is a first IP address;
the user plane network element determines that the first IP address is not authenticated;
the user plane network element sends an authentication request to the control plane network element, where the authentication request includes the first IP address;
the user plane network element receives a first session from the control plane network element, where the first session responds to the authentication request, and the first session is corresponding to the first IP address; and
the user plane network element advertises first routing information based on the first session, where a destination address of the first routing information is the first IP address.

In the foregoing method, when the source IP address of the packet received by the user plane network element is the unauthenticated first IP address, the user plane network element may obtain, from the control plane network element, the first session corresponding to the first IP address. In this process, user equipment is always in an online state without a need of redialing, and a network disconnection does not occur in the entire process. This ensures that when maintaining a network connected state, the user equipment 100 switches between a plurality of APs connected to different BNGs.

In an embodiment, the user plane network element includes a user plane user table, and the user plane user table is used to store a session corresponding to an authenticated IP address. That the user plane network element determines that the first IP address is not authenticated includes: The user plane network element determines that the user plane user table does not include the first session. After that the user plane network element receives a first session from the control plane network element, the method further includes: The user plane network element stores the first session in the user plane user table, to obtain an updated user plane user table.

It may be understood that, after the user plane network element stores the first session in the user plane user table, when receiving a packet whose source IP address is the first IP address again, the user plane network element may directly determine, based on the first session in the user plane user table, that the first IP address is authenticated, and forward the packet based on the first routing information in the first session. There is no need to send the authentication request for the first IP address to the control plane network element again. This improves packet forwarding efficiency and user experience.

In an embodiment, the method further includes: The user plane network element sends a dialup request to the control plane network element, where the dialup request includes a second IP address; when the dialup request succeeds, the user plane network element receives a second session from the control plane network element, where the second session is corresponding to the second IP address, and the second session is generated by the control plane network element in response to the dialup request, the user plane network element advertises second routing information based on the second session, where a destination address of the second routing information is the second IP address, and the user plane network element stores the second session in the user plane user table, to obtain an updated user plane user table; or when the dialup request fails, the user plane network element receives a failure message from the control plane network element, where the failure message is used to indicate that the dialup request fails.

It may be understood that, if user equipment 100 corresponding to the second IP address has sent the dialup request to the user plane network element, the user plane network element may send the dialup request to the control plane network element, so that the control plane network element sends the dialup request to an AAA server 310 for authentication. After the AAA 310 determines information such as whether the IP address has access permission, which services can be used, and a record of a network resource used by the IP address, the AAA 310 returns a dialup success message of the IP address to the control plane network element 420, and the control plane network element 420 may generate, based on the dialup success message, the second session corresponding to the second IP address. The second session corresponding to the second IP address is stored in the user plane user table, is delivered to the user plane network element, and is stored in the user plane user table. In this way, some program processing during a session is facilitated, so that each time the user plane network element 410 receives a data packet sent by the user equipment corresponding to the IP address, the session corresponding to the IP address of the user equipment may be used to directly determine whether the IP address corresponding to the user equipment has permission to access the network, whether successful dialup is in an authenticated state, whether the IP address corresponding to the user equipment has permission to use a value-added service in the network, available network bandwidth, routing information required for forwarding the data packet sent by the user equipment, and the like. There is no need to repeatedly send the authentication request to the AAA by using the control plane network element 420, to verify various user information of the user equipment 100.

In an embodiment, the control plane network element includes a control plane user table, and the control plane user table is used to store a session corresponding to an authenticated IP address. That the user plane network element receives a first session from the control plane network element includes: The user plane network element receives the first session from the control plane network element, where the first session is obtained by the control plane network element by querying the control plane user table based on the authentication request.

It may be understood that, if the user equipment corresponding to the first IP address has sent a dialup request to the user plane network element by using another control plane network element, the user plane network element stores the first session corresponding to the first IP address. Therefore, even if a user plane network element currently connected to the user equipment does not store the first session, the user plane network element may obtain the first session by using the control plane network element. The control plane network element may query the control plane user plane table, and deliver the first session to the user plane network element. There is no need repeatedly sending the authentication request to the AAA, and this improves the packet forwarding efficiency and user experience.

In an embodiment, that the user plane network element receives a first session from the control plane network element includes: The user plane network element receives the first session from the control plane network element, where the first session is generated by the control plane network element based on the authentication request.

It may be understood that, if the control plane user table of the control plane network element does not include the first session, it indicates that the control plane network element has not received the dialup request for the first IP address, and the control plane network element may send the dialup request for the first IP address to the AAA for authentication. After the dialup succeeds, the control plane network element can generate the first session based on a dialup success message returned by the AAA, store the first session in the control plane user table, and deliver the first session to the user plane network element. Therefore, when receiving a packet whose source address is the first IP address again, the user plane network element may directly forward, based on the first session, the packet sent from the first IP address. There is no need repeatedly sending the authentication request to the control plane network element, and this improves the packet forwarding efficiency and user experience.

It should be noted that, if the control plane user table of the control plane network element does not include the first session, the control plane network element may further perform processing in different manners based on a service requirement. For example, the control plane network element may further directly discard a packet. This is not specifically limited in this application.

In an embodiment, that the user plane network element receives a packet includes: The user plane network element receives a packet sent by the user equipment through a network access point AP; or the user plane network element receives a packet sent by the user equipment through a router, where an IP address of the user equipment is the first IP address.

It may be understood that, if the user equipment is first connected to a second user plane network element through a second AP, and sends the dialup request to the second user plane network element through the second AP. After the dialup succeeds, the first session is stored in the control plane user table of the control plane network element and a user plane user table of the second user plane network element, and then the user equipment is disconnected from a first AP and connected to a first AP that is connected to a first user plane network element. Because the first session is not stored in a user plane user table of the first user plane network element, step S401 to step S405 are performed. The first user plane network element may obtain the first session of the user equipment from the control plane network element. In this period, the user equipment does not need to perform redialing. Therefore, a network disconnection does not occur in the entire process. In this way, in the layer 3 network, when maintaining a network connected state, the user equipment switches between a plurality of APs connected to different BNGs.

In an embodiment, the packet is a data packet.

According to a second aspect, a method for advertising a route is provided, and is applied to a layer 3 network in an open systems interconnection OSI model. The network includes a control plane network element and a user plane network element that are connected to each other, and the method includes the following steps:
The control plane network element receives an authentication request from the user plane network element, where the authentication request includes a first IP address;
the control plane network element determines that the first IP address is not authenticated; and
the control plane network element sends a first session to the user plane network element, where the first session is corresponding to the first IP address, the first session is used to indicate the user plane network element to advertise first routing information, and a destination address of the first routing information is the first IP address.

In the foregoing method, when a source IP address of a packet received by the user plane network element is an unauthenticated first IP address, the user plane network element may obtain, from the control plane network element, the first session corresponding to the first IP address. In this process, user equipment is always in an online state without a need of redialing, and a network disconnection does not occur in the entire process. This ensures that when maintaining a network connected state, the user equipment 100 switches between a plurality of APs connected to different BNGs.

In an embodiment, the control plane network element includes a control plane user table, and the control plane user table is used to store a session corresponding to an authenticated IP address. That the control plane network element sends a first session to the user plane network element includes: The control plane network element queries the control plane user table based on the authentication request, to obtain the first session corresponding to the first IP address; and the control plane network element sends the first session to the user plane network element.

It may be understood that, if the user equipment corresponding to the first IP address has sent a dialup request to the user plane network element by using another control plane network element, the user plane network element stores the first session corresponding to the first IP address. Therefore, even if a user plane network element currently connected to the user equipment does not store the first session, the user plane network element may obtain the first session by using the control plane network element. The control plane network element may query the control plane user plane table, and deliver the first session to the user plane network element. There is no need repeatedly sending the authentication request to AAA, and this improves packet forwarding efficiency and user experience.

In an embodiment, that the control plane network element sends a first session to the user plane network element includes: The control plane network element generates the first session corresponding to the first IP address; and the control plane network element sends the first session to the user plane network element.

It may be understood that, if the control plane user table of the control plane network element does not include the first session, it indicates that the control plane network element has not received the dialup request for the first IP address, and the control plane network element may send the dialup request for the first IP address to the AAA for authentication. After the dialup succeeds, the control plane network element can generate the first session based on a dialup success message returned by the AAA, store the first session in the control plane user table, and deliver the first session to the user plane network element. Therefore, when receiving a packet whose source address is the first IP address again, the user plane network element may directly forward, based on the first session, the packet sent from the first IP address. There is no need repeatedly sending the authentication request to the control plane network element, and this improves packet forwarding efficiency and user experience.

It should be noted that, if the control plane user table of the control plane network element does not include the first session, the control plane network element may further perform processing in different manners based on a service requirement. For example, the control plane network element may further directly discard a packet. This is not specifically limited in this application.

In an embodiment, the user plane network element includes a user plane user table, and the user plane user table is used to store a session corresponding to an authenticated IP address. The first session is further used to indicate the user plane network element to store the first session in the user plane user table, to obtain an updated user plane user table.

It may be understood that, after the user plane network element stores the first session in the user plane user table, when receiving a packet whose source IP address is the first IP address again, the user plane network element may directly determine, based on the first session in the user plane user table, that the first IP address is authenticated, and forward the packet based on the first routing information in the first session. There is no need sending the authentication request for the first IP address to the control plane network element again. This improves the packet forwarding efficiency and user experience.

In an embodiment, the method further includes: The control plane network element receives a dialup request from the user plane network element, where the dialup request includes a second IP address; when the dialup request succeeds, the control plane network element sends a second session to the user plane network element, where the second session is corresponding to the second IP address, the second session is used to indicate the user plane network element to advertise second routing information, a destination address of the second routing information is the second IP address, and the second session is further used to indicate the user plane network element to store the second session in the user plane user table, to obtain an updated user plane user table, the control plane network element stores the second session in the control plane user table, to obtain an updated control plane user table; or when the dialup request fails, the control plane network element sends a failure message to the user plane network element, where the failure message is used to indicate that the dialup request fails.

It may be understood that, if user equipment 100 corresponding to the second IP address has sent the dialup request to the user plane network element, the user plane network element may send the dialup request to the control plane network element, so that the control plane network element sends the dialup request to the AAA 310 for authentication. After the AAA 310 determines information such as whether the IP address has access permission, which services can be used, and a record of a network resource used by the IP address, the AAA 310 returns a dialup success message of the IP address to the control plane network element 420, and the control plane network element 420 may generate, based on the dialup success message, the second session corresponding to the second IP address. The second session corresponding to the second IP address is stored in the user plane user table, is delivered to the user plane network element, and is stored in the user plane user table. In this way, some program processing during a session is facilitated, so that each time the user plane network element 410 receives a data packet sent by the user equipment corresponding to the IP address, the session corresponding to the IP address of the user equipment may be used to directly determine whether the IP address corresponding to the user equipment has permission to access the network, whether successful dialup is in an authenticated state, whether the IP address corresponding to the user equipment has permission to use a value-added service in the network, available network bandwidth, routing information required for forwarding the data packet sent by the user equipment, and the like. There is no need repeatedly sending the authentication request to the AAA by using the control plane network element 420, to verify various user information of the user equipment 100.

In an embodiment, the packet is a packet sent by user equipment to the user plane network element through a network access point AP, or the packet is a packet sent by the user equipment to the user plane network element through a router. An IP address of the user equipment is the first IP address.

It may be understood that, if the user equipment is first connected to a second user plane network element through a second AP, and sends the dialup request to the second user plane network element through the second AP. After the dialup succeeds, the first session is stored in the control plane user table of the control plane network element and a user plane user table of the second user plane network element, and then the user equipment is disconnected from a first AP and connected to a first AP that is connected to a first user plane network element. Because the first session is not stored in a user plane user table of the first user plane network element, step S401 to step S405 are performed. The first user plane network element may obtain the first session of the user equipment from the control plane network element. In this period, the user equipment does not need to perform redialing. Therefore, a network disconnection does not occur in the entire process. In this way, in the layer 3 network, when maintaining a network connected state, the user equipment switches between a plurality of APs connected to different BNGs.

In an embodiment, the packet is a data packet.

According to a third aspect, a user plane network element is provided, and is applied to a layer 3 network in an open systems interconnection OSI model. The network includes a control plane network element and the user plane network element that are connected to each other, and the user plane network element includes:
a receiving unit, configured to receive a packet, where a source IP address of the packet is a first IP address;
a processing unit, configured to determine that the first IP address is not authenticated; and
a sending unit, configured to send an authentication request to the control plane network element, where the authentication request includes the first IP address; where
the receiving unit is further configured to receive a first session from the control plane network element, where the first session responds to the authentication request, and the first session is corresponding to the first IP address; and
the sending unit is further configured to advertise first routing information based on the first session, and a destination address of the first routing information is the first IP address.

In an embodiment, the user plane network element includes a user plane user table, and the user plane user table is used to store a session corresponding to an authenticated IP address. The processing unit is further configured to determine that the user plane user table does not include the first session. The processing unit is further configured to: after the receiving unit receives the first session from the control plane network element, store the first session in the user plane user table, to obtain an updated user plane user table.

In an embodiment, the sending unit is further configured to send a dialup request to the control plane network element, where the dialup request includes a second IP address. The receiving unit is further configured to receive a second session from the control plane network element, where the second session is corresponding to the second IP address, and the second session is generated by the control plane network element in response to the dialup request. The sending unit is further configured to advertise second routing information based on the second session, where a destination address of the second routing information is the second IP address. The processing unit is further configured to store the second session in the user plane user table, to obtain an updated user plane user table. Alternatively, the receiving unit is further configured to receive a failure message from the control plane network element, where the failure message is used to indicate that the dialup request fails.

In an embodiment, the control plane network element includes a control plane user table, and the control plane user table is used to store a session corresponding to an authenticated IP address. The receiving unit is further configured to receive the first session from the control plane network element, where the first session is obtained by the control plane network element by querying the control plane user table based on the authentication request.

In an embodiment, the receiving unit is further configured to receive the first session from the control plane network element, where the first session is generated by the control plane network element based on the authentication request.

According to a fourth aspect, a control plane network element is provided, and is applied to a layer 3 network in an open systems interconnection OSI model. The network includes the control plane network element and a user plane network element that are connected to each other, and the control plane network element includes:
a receiving unit, configured to receive an authentication request from the user plane network element, where the authentication request includes a first IP address; and
a sending unit, configured to send a first session to the user plane network element, where the first session is corresponding to the first IP address, the first session is used to indicate the user plane network element to advertise first routing information, and a destination address of the first routing information is the first IP address.

In an embodiment, the control plane network element further includes a processing unit, the control plane network element includes a control plane user table, and the control plane user table is used to store a session corresponding to an authenticated IP address. The processing unit is configured to query the control plane user table based on the authentication request, to obtain the first session corresponding to the first IP address. The sending unit is further configured to send the first session to the user plane network element.

In an embodiment, the processing unit is further configured to generate the first session corresponding to the first IP address. The sending unit is further configured to send the first session to the user plane network element.

In an embodiment, the receiving unit is further configured to receive a dialup request from the user plane network element, where the dialup request includes a second IP address. The sending unit is further configured to send a second session to the user plane network element, where the second session is corresponding to the second IP address, the second session is used to indicate the user plane network element to advertise second routing information, a destination address of the second routing information is the second IP address, and the second session is further used to indicate the user plane network element to store the second session in the user plane user table, to obtain an updated user plane user table. The processing unit is further configured to store the second session in the control plane user table, to obtain an updated control plane user table. Alternatively, the sending unit is further configured to send a failure message to the user plane network element, where the failure message is used to indicate that the dialup request fails.

According to a fifth aspect, a network system is provided, and is applied to a layer 3 network in an open systems interconnection OSI model. The network system includes a control plane network element and a user plane network element that are connected to each other. The control plane network element performs the method described in the second aspect, and the user plane network element is configured to perform the method described in the first aspect.

According to a sixth aspect, a computer-readable storage medium is provided, including instructions. When the instructions are run on a computing device, the computing device is enabled to perform the method described in the first aspect or the second aspect.

According to a seventh aspect, an electronic device is provided, including a processor and a memory. The processor executes code in the memory to perform the method described in any one of the first aspect or the optional manners of the first aspect or the method described in any one of the second aspect or the optional manners of the second aspect.

According to an eighth aspect, a computer program product is provided. When the computer program product is run on a network device, the network device is enabled to perform the packet forwarding method provided in any one of the first aspect or the optional manners of the first aspect or the packet forwarding method provided in any one of the second aspect or the optional manners of the second aspect.

According to a ninth aspect, a chip is provided. When the chip runs on a network device, the network device is enabled to perform the packet forwarding method provided in any one of the first aspect or the optional manners of the first aspect or the packet forwarding method provided in any one of the second aspect or the optional manners of the second aspect.

### BRIEF DESCRIPTION OF DRAWINGS

To describe the technical solutions in embodiments of this application or in the conventional technology more clearly, the following briefly describes the accompanying drawings for describing the embodiments or the conventional technology.
FIG. 1 is a schematic structural diagram of an access network applied to a layer 3 network according to this application;
FIG. 2 is a schematic structural diagram of a network system applied to a layer 3 network according to this application;
FIG. 3 is a schematic diagram of interfaces between a user plane network element and a control plane network element in a network system according to this application;
FIG. 4 is a schematic flowchart of a method for advertising a route according to this application;
FIG. 5 is a schematic structural diagram of a user plane network element according to this application;
FIG. 6 is a schematic structural diagram of a control plane network element according to this application; and
FIG. 7 is a schematic structural diagram of an electronic device according to this application.

### DESCRIPTION OF EMBODIMENTS

The following describes the technical solutions in embodiments of the present invention with reference to the accompanying drawings in the embodiments of the present invention. It is clearly that the described embodiments are merely a part rather than all of the embodiments of the present invention. All other embodiments obtained by a person of ordinary skill in the art based on the embodiments of the present invention without creative efforts shall fall within the protection scope of the present invention.

With rapid development of internet applications and intelligent terminals, a user may access the internet anytime and anywhere by using various intelligent terminals or personal computers such as a smartphone, a tablet computer, and a computer, for work, communication, entertainment activities, and the like. The user usually communicates with a core network (Core Network) through an access network, and uses various services of the core network. The access network herein is a layer 3 network in the OSI model.

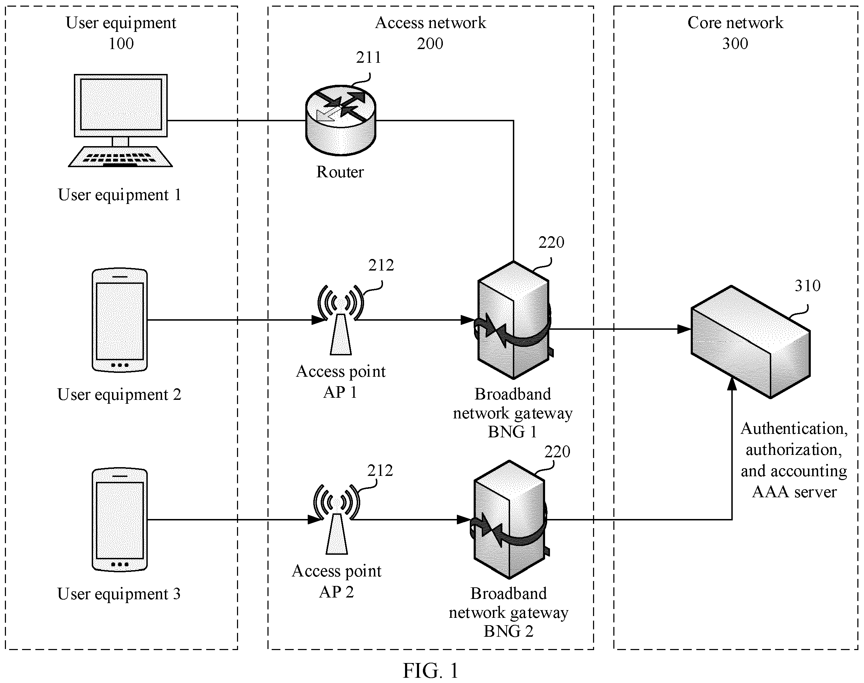

FIG. 1 is a schematic diagram of a network topology of an access network according to an embodiment of the present invention. As shown in FIG. 1, various types of user equipments 100 may access a fixed broadband network (namely, a core network 300 in FIG. 1) by using the access network 200.

The user equipment 100 connected to the access network 200 may be a mobile terminal. The user equipment 100 may be specifically a wireless electronic device that can be connected to a wireless access point AP, may be a wired electronic device that can be connected to a router, or may be an electronic device that can be connected to both an AP and a router. The electronic device may be specifically a smartphone, a palmtop processing device, a tablet computer, a personal computer, a mobile notebook computer, a virtual reality device, an integrated handheld device, a vehicle-mounted device, an intelligent conference device, an intelligent advertisement device, a smart home appliance, a wearable device, or the like. The wearable device may also be referred to as a wearable intelligent device, and is a generic term for wearable devices that are developed by applying wearable technologies to perform intelligent design on daily wear, such as glasses, gloves, watches, clothes, and shoes. The wearable device may be a portable device that can be directly worn by a user or integrated into clothes or an accessory of a user. The wearable device can implement a powerful function through software support, data exchange, and cloud interaction. Generalized wearable intelligent devices include full-featured and large-size devices that can implement complete or partial functions without depending on smartphones, for example, smart watches or smart glasses, and devices that focus on only one type of application function and need to work with another device such as a smartphone, for example, various smart bands or smart accessories for monitoring physical signs. It should be understood that the foregoing examples are merely used for description, and do not constitute a specific limitation.

The core network 300 connected to the access network is configured to process various service requests sent by the user equipment 100 by using the access network 200. In brief, the access network 200 is used to adapt to diversity of the user equipment 100, and the core network 300 faces consistent service requests processed by the access network 100. This greatly simplifies a network architecture, and further improves a service processing capability of the core network 300. It should be noted that the core network 300 may include a plurality of servers or systems for processing a user service. In FIG. 1, only authentication, authorization and accounting (Authentication, Authorization and Accounting, AAA) 310 is used as an example for description. In a specific implementation, the core network 300 may further include a web server (Web Sever), a DHCP server, a remote authentication dial-in user service (Remote Authentication Dial In User Service) system, and the like. This is not specifically limited in this application.

The following briefly describes a network structure of the access network 200. It can be learned from FIG. 1 that the access network 200 may include one or more access points (Access Point, AP) 212, one or more routers (Router) 211, and one or more broadband network gateways (Broadband Network Gateway, BNG) 220. In FIG. 1, only three user equipments 100, two APs 212, one router 211, and two BNGs 220 are used as an example for description. In a specific implementation, quantities of the user equipments 100, the APs 212, the routers 211, and the BNGs 220 may be determined based on an actual situation. This is not specifically limited in this application.

The AP 212 is an access point that uses a wireless device to access a wired network, and is a bridge between a wireless network and the wired network. Usually, the AP 212 is connected to a wired switch or a router, so that a wireless device that accesses the AP can be connected to the wired switch or the router through the wireless AP. APs are mainly used in places, for example, broadband homes, buildings, campuses, warehouses, and factories, that require wireless networks. The APs not only include a pure wireless access point (wireless switch), but also may be a generic term of devices, for example, a wireless router (including a wireless gateway and a wireless bridge) that has a routing function and can establish independent wireless home networking, and the like. In FIG. 1, user equipment 2 may communicate with a BNG 1 through an AP 1, and user equipment 3 may communicate with a BNG 2 through an AP 2.

The router 211 is a hardware device that connects two or more networks, functions as a gateway between the networks, is configured to connect a non-TCP/IP network to the internet, and is a dedicated intelligent network device that reads an address in each data packet and then determines how to transmit the data packet. The router 122 usually can understand different forwarding protocols. For example, if a local area network uses an Ethernet protocol, and the internet uses a TCP/IP protocol, a router between the Ethernet and the internet may analyze a destination address of a data packet sent from the local area network, translate the address of the local area network into a TCP/IP address, and transmit the data packet to the TCP/IP address along an optimal route based on a selected routing algorithm. The reverse is also true, and details are not described herein again. In FIG. 1, user equipment 1 may communicate with the BNG 1 through the router 211.

The BNG 220 is a bond connecting a user, a network, and a service, and may centrally manage services and traffic that are required by a plurality of user equipments 100. Specifically, when accessing the internet for an initial time, the user equipment 100 sends a dialup request to the BNG 220 through the access point AP 212 or the router 211. The dialup request includes an IP address of the user equipment 110. The BNG 130 may authenticate the IP address, for example, send an authentication request to the authentication, authorization, and accounting (Authentication, Authorization and Accounting, AAA) 310 in the core network 300, to verify authentication information of the user equipment 100, for example, available network services, bandwidth, a usage amount, and a balance, to obtain the authentication information of the user equipment 100. Details are not described herein. When the IP address is authenticated successfully, the BNG 130 stores authentication information corresponding to the IP, for example, the static IP address, the bandwidth, and an inaccessible address list (List) of the user equipment 100. In this way, when the user equipment 100 sends a data packet to the BNG 220 through the AP 212 or the router 211, the BNG 220 queries the stored authentication information. If the authentication information includes the IP address of the user equipment 100, it proves that the user equipment 100 has been authenticated successfully, and the BNG 220 forwards the data packet sent by the user equipment 100. Specific forwarding steps are not described herein. If the authentication information does not include the IP address of the user equipment 100, it proves that the user equipment 110 is not authenticated, and the BNG 220 refuses to forward the data packet.

It can be understood that, in an access network system of a layer 3 network in the OSI model shown in FIG. 1, after the user 212 or the router 211 sends a dialup request to a BNG 220, and the dialup succeeds, authentication information of the successful dialup of the user 212 or the router 211 is stored in the BNG. However, each BNG 200 stores only an IP address of user equipment that sends a dialup request to the BNG 200 and whose dialup succeeds, and does not store an IP address of user equipment that sends a dialup request to another BNG and whose dialup succeeds. Therefore, in the network system shown in FIG. 1, when switching between a plurality of APs connected to different BNGs, the user equipment cannot maintain a network connected state. For example, when the user equipment 2 in FIG. 1 has sent a dialup request to the BNG 1 through the AP 1 and the dialup succeeds, suddenly, the user equipment 2 is disconnected from the AP 1 and is connected to the AP 2. In this case, although the user equipment 2 has been authenticated through the BNG 1 and authentication information has been stored in the BNG 1, the user equipment 2 needs to re-send a dialup request to the BNG 2 for that the AP 2 is connected to the BNG 2 and that the BNG 2 does not store authentication information successfully authenticated by the AP 2. The user equipment 2 can access the internet again only after the user equipment 2 is successfully authenticated again through the BNG 2. In this period, the user equipment 2 is always in a network disconnected state, which brings inconvenience to a user.

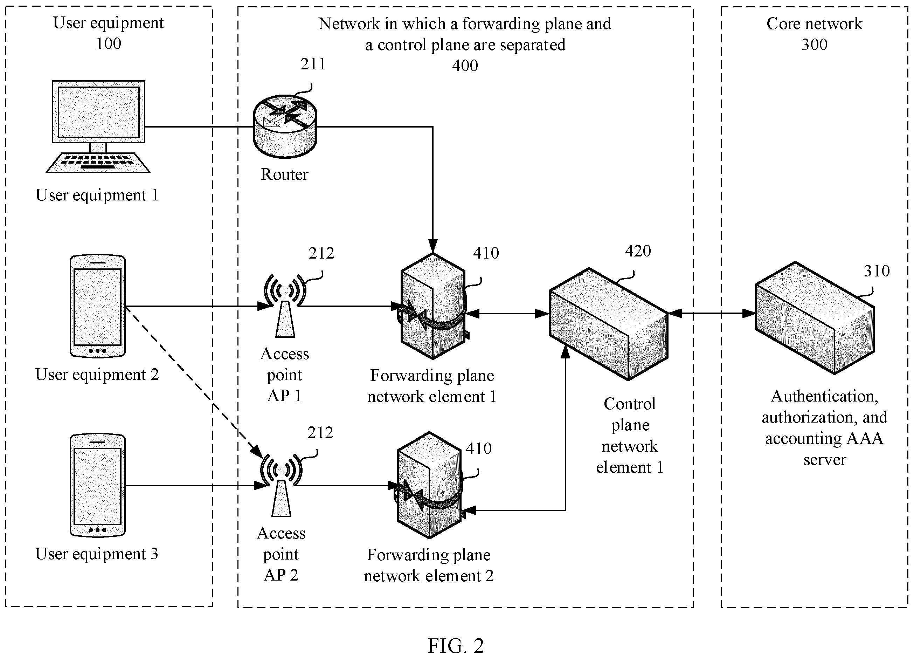

This application provides a network system, applied to a layer 3 network in the OSI model, to ensure that in the foregoing layer 3 network in the OSI model, when switching between a plurality of APs or routers connected to different BNGs, the user equipment cannot maintain the network connected state. As shown in FIG. 2, various types of user equipments 100 may be connected to the core network 300 by using the network system 400. For the user equipment 100 and the core network 300, refer to the content described in the embodiment in FIG. 1. Details are not described herein again. It should be noted that division of internal unit modules of the network system 400 shown in FIG. 2 may be performed in a plurality of manners. The modules may be software modules, hardware modules, or a combination of some software modules and some hardware modules. This is not limited in this application. FIG. 2 shows an example of a division manner. This is not specifically limited in this application.

As shown in FIG. 2, the network system 400 includes at least a User Planeuser plane (User Plane) network element 410 and a control plane (Control Plane) network element 420. The user plane network element 410 may be directly connected to the control plane network element 420, or may be connected to the control plane network element 420 through a core router (Core Router, CR). It should be understood that the network system 400 may further include the AP 212 and the router 211 described in the foregoing content, or may not include the AP 212 and the router 211 described in the foregoing content. This is not specifically limited in this application. The network system 400 may be a network in which "a user plane and a control plane are separated". To be specific, a user plane and a control plane of a BNG are separated. In brief, one or more BNGs in the foregoing content are separated into one or more control plane network elements 410 and one or more user plane network elements 410. One control plane network element may centrally control and manage a plurality of user plane network elements, so that the user plane network element 410 can forward, under management of the control plane network element 420, a data packet sent by the user equipment. For example, after being separated from each other, the BNG 1 and the BNG 2 in FIG. 1 may become a user plane network element 1, a user plane network element 2, and a control plane network element 1 shown in FIG. 2. It may be understood that FIG. 2 is merely used as an example for description. A quantity of user plane network elements and a quantity of control plane network elements are not limited in this application. The following separately describes the control plane network element 420 and the user plane network element 410 in detail.

The user plane network element 410 is mainly configured to forward, based on Session delivered by the control plane network element 420, a data packet sent by the user equipment 100. The session is used to store authentication information that needs to be stored when user equipment corresponding to each IP address performs data communication (namely, a session) with the user plane network element, for example, store a user name, a MAC address, an IP address, bandwidth, a value-added service, an inaccessible address list (List), routing information, and the like of the user equipment corresponding to each IP address. The routing information may store a path pointing to a specific network address, and is used to guide the user plane network element 1 to route and forward a data packet. The routing information may be information such as a routing table (Routing Table) or a routing information base (Routing Information Base, RIB). For example, the routing information may be a destination address, a netmask, an output interface, an IP address of a next hop, and the like. This is not limited in this application.

Therefore, after the user equipment sends a dialup request for an IP address to the user plane network element 410 for an initial time, the user plane network element 410 may send the dialup request to the control plane network element 420, and the control plane network element 420 sends the dialup request to the AAA 310 for authentication. When the AAA 310 confirms that the IP address has access permission to the network, it indicates that the dialup succeeds. If the IP address does not have the access permission, it indicates that the dialup fails. After the dialup succeeds, the AAA 310 may further determine information such as which services can be used by the IP address, and a record of a network resource used by the IP address. The AAA 310 encapsulates the confirmed information into a dialup success message, and returns the dialup success message to the control plane network element 420. If receiving the dialup success message returned by the AAA 310, the control plane network element 420 can generate a session corresponding to the IP address based on the dialup success message. In other words, this indicates that a session has been established between the user equipment and the user plane network element 410. The session is delivered to the user plane network element 410, and the user plane network element 410 stores the session corresponding to the IP address that is corresponding to the user equipment. In this way, some program processing during the session is facilitated, so that each time the user plane network element 410 receives a data packet sent by the user equipment corresponding to the IP address, the session corresponding to the IP address of the user equipment may be used to directly determine whether the IP address corresponding to the user equipment has permission to access the network, whether successful dialup is in an authenticated state, whether the IP address corresponding to the user equipment has permission to use a value-added service in the network, available network bandwidth, routing information required for forwarding the data packet sent by the user equipment, and the like. There is no need repeatedly sending the authentication request to the AAA by using the control plane network element 420, to verify various user information of the user equipment 100.

The user plane network element 410 may be a virtualized network element, or may be a physical device. When the user plane network element 410 is a virtualized network element, the user plane network element 410 may be referred to as a vUP for short, and may be specifically a virtualized network function (Virtualized Network Functions, VNF) running on an X86 server. When the user plane network element 410 is a physical device, the user plane network element may be referred to as a pUP for short, and may be specifically a conventional hardware network device. A specific form of the user plane network element 410 is not limited in this application.

The control plane network element 420 is configured to centrally manage a plurality of user plane network elements 410, and is mainly configured to be responsible for processing of a dialup request and an authentication request, for example, interacting with the AAA 300 to perform user authentication, accounting, authorization, and the like. The control plane network element 420 is usually a virtualized network element, and is also referred to as a vBNG-CP. In a specific implementation, the vBNG-CP may be implemented by using a cloudification technology. The cloudified vBNG-CP may include a plurality of virtual machines (Virtual Machine, VM) deployed on a physical server, and the plurality of VMs may be centrally managed by a virtual machine monitor (Hypervisor) running on the physical server. One vBNG-CP may manage a plurality of pUPs and vUPs.

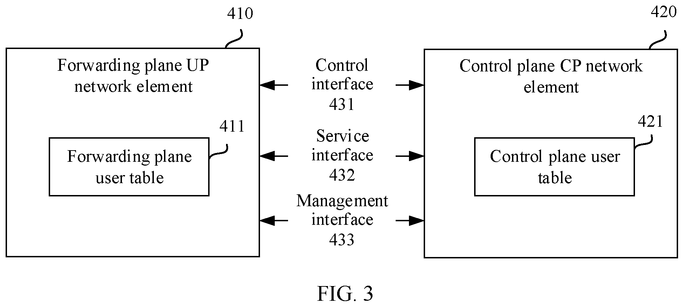

FIG. 3 is a schematic diagram of internal structures of the control plane network element 420 and the user plane network element 410 in the network system 400 shown in FIG. 2. Division of internal unit modules of the control plane network element 420 and the user plane network element 410 shown in FIG. 3 may be performed in a plurality of manners. The modules may be software modules, hardware modules, or a combination of some software modules and some hardware modules. This is not limited in this application. FIG. 3 is an example of a division manner.

As shown in FIG. 3, the control plane network element 420 stores a control plane user table 421, and the control plane user table 421 is used to store a session corresponding to an IP address that is successfully authenticated. The user plane network element 410 stores a user plane user table 411, and the user plane user table 411 is also used to store a session corresponding to an IP address that is successfully authenticated. However, all sessions in the user plane user table 411 are delivered by the control plane network element 420. In other words, the control plane user table 421 of the control plane network element 420 stores all sessions in the user plane user table of the user plane network element 410 managed by the control plane network element 420. FIG. 2 is used as an example. A control plane user table 421 of the control plane network element 1 includes a session in a user plane user table of the user plane network element 1 and a session in a user plane user table of the user plane network element 2. Therefore, after the user equipment 100 sends a dialup request to the user plane network element 1, the dialup request is sent to the control plane network element 420 for processing. If the dialup succeeds, a session of the user equipment 100 is stored in the control plane user table of the control plane network element 1. Regardless of using, by the user equipment 100, the user plane network element 1 or the user plane network element 2 to forward a data packet, either the user plane network element 1 or the user plane network element 2 may obtain the session of the user equipment 100 from the control plane network element 1. Either the user plane network element 1 or the user plane network element 2 forwards the data packet based on routing information in the session of the user equipment 100 without a need of redialing. Therefore, this ensures that in the layer 3 network in the OSI model, when switching between a plurality of APs of different BNGs, the user equipment cannot maintain the network connected state.

In a specific implementation, the control plane network element 420 and the user plane network element 410 may perform data communication by using three interfaces, so that when maintaining the network connected state, the user equipment can switch between a plurality of APs connected to different BNGs. The three interfaces are respectively a control interface 431, a service interface 432, and a management interface 433. The service interface 432 may use a generic protocol extension for a Generic Protocol Extension for VXLAN (Generic Protocol Extension for VXLAN, VXLAN-GPE) interface. When receiving a dialup request of a user, the user plane network element 410 may encapsulate the dialup request through the service interface 432, and send the dialup request to the control plane network element 420 for processing. The control interface 431 may be a control plane and user plane separated protocol (Control Plane and User Plane Separated Protocol, CUSP) interface of a cloudified broadband remote access server (Broadband Remote Access Server, BRAS). After the control plane network element 420 receives the dialup request sent by the user plane network element 410 through the service interface 432, if a first IP address in the dialup request is authenticated successfully, the control plane network element 420 may deliver, to the user plane network element 410 through the control interface 431, a first session corresponding to the first IP address. The management interface 433 is a network configuration protocol (Network Configuration Protocol, Netconf) interface. The control plane network element 420 may deliver some configurations, for example, configuration data of a virtual local area network (Virtual Local Area Network, VLAN) and a virtual private network (Virtual Private Network, VPN), to the user plane network element 410 through the interface. The user plane network element 410 may also report, to the control plane network element 420 through the management interface 433, some running statuses, for example, whether the user plane network element 410 is in a faulty state, whether a quantity of sessions stored in the user plane user table 411 of the user plane network element 410 reaches a threshold, and the like. It should be understood that the foregoing three interfaces are merely used as examples for description. Data communication may be further performed between the control plane network element 420 and the user plane network element 410 through more or fewer interfaces based on an actual situation. This is not specifically limited in this application.

It may be understood that, in the network system that is provided in this application and that is applied to the layer 3 network in the OSI model, after the user equipment sends the dialup request to the user plane network element 410, and the dialup succeeds, the session of the user equipment 100 is stored in the control plane user table of the control plane network element 420. Regardless of which user plane network element 410 in the network does the user equipment sends a data packet to, and even if a user plane user table of a user plane network element 410 that receives the data packet does not store a session of the user equipment, the user plane network element 410 that receives the data packet may obtain, from the control plane network element 420, the session corresponding to the user equipment 100, and a user does not need to perform redialing. Therefore, a network disconnection does not occur in the entire process. This ensures that when maintaining the network connected state, the user equipment 100 switches between a plurality of APs connected to different BNGs.

With reference to the accompanying drawings, the following describes in detail how the foregoing network system provided in this application ensures that in the layer 3 network in the OSI model, when maintaining the network connected state, the user equipment switches between a plurality of APs connected to different BNGs.

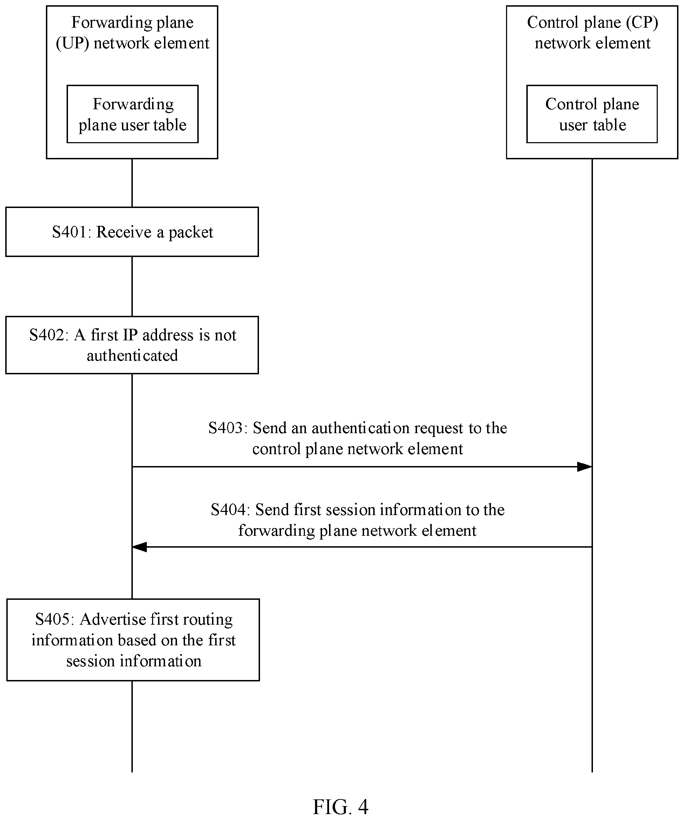

As shown in FIG. 4, this application provides a method for advertising a route. The method is applied to a layer 3 network in an open systems interconnection OSI model, for example, may be applied to the network system 400 shown in FIG. 2. The network includes a control plane network element and a user plane network element that are connected to each other. The control plane network element herein is the control plane network element 420 in the embodiment of FIG. 2, and the user plane network element is the user plane network element 410 in the embodiment of FIG. 2. The user plane network element includes a user plane user table, and the control plane network element includes a control plane user table. The user plane user table and the control plane user table are used to store a session corresponding to a successfully authenticated IP address. The user plane user table is used to store a session corresponding to an authenticated IP address, and the control plane user table is used to store a session corresponding to an authenticated IP address. The method may include the following steps.

S401: The user plane network element receives a packet, where a source IP address of the packet is a first IP address.

In an embodiment, the packet is a data packet. Specifically, the data packet may be sent by user equipment 100 to the user plane network element through an AP 212, and the first IP address may be an IP address of the user equipment 100.

S402: The user plane network element determines that the first IP address is not authenticated.

In a specific implementation, that the user plane network element determines that the first IP address is not authenticated includes: The user plane network element determines that the user plane user table does not include a first session. It may be understood that, referring to the embodiment in FIG. 2, it may be learned that if the user equipment 100 corresponding to the first IP address has sent a dialup request to the user plane network element, the user plane network element may send the dialup request to the control plane network element, so that the control plane network element sends the dialup request to AAA 310 for authentication. After the AAA 310 determines information such as whether the IP address has access permission, which services can be used, and a record of a network resource used by the IP address, the AAA 310 returns a dialup success message of the IP address to the control plane network element 420, and the control plane network element 420 may generate, based on the dialup success message, the first session corresponding to the first IP address. The first session corresponding to the first IP address is stored in the user plane user table, is delivered to the user plane network element, and is also stored in the user plane user table. The user plane network element may forward a subsequently received packet based on the first session. If the user equipment 100 corresponding to the first IP address has never sent the dialup request to the user plane network element, the user plane user table does not store the first session corresponding to the first IP address. Therefore, the user plane network element sends an authentication request to the control plane network element, that is, step S403 is performed.

In an embodiment, after the user plane network element receives the first session from the control plane network element, the method further includes: The user plane network element stores the first session in the user plane user table, to obtain an updated user plane user table. It may be understood that, after the first session is stored in the user plane user table, when receiving a packet whose source IP address is the first IP address again, the user plane network element may directly determine, based on the first session in the user plane user table, whether the first IP address has permission to use the network, whether successful dialup is in an authenticated state, whether the first IP address has permission to use a value-added service in the network, available network bandwidth, routing information required for forwarding the data packet sent by the user equipment, and the like. There is no need repeatedly sending the authentication request to the AAA by using the control plane network element 420, to verify various information of the user equipment 100. This improves packet forwarding efficiency and user experience.

S403: The user plane network element sends the authentication request to the control plane network element, and the control plane network element receives the authentication request from the user plane network element, where the authentication request includes the first IP address. In a specific implementation, the user plane network element may send the authentication request to the control plane network element through the service interface 432 shown in FIG. 3.

S404: The control plane network element sends the first session to the user plane network element, and the user plane network element receives the first session from the control plane network element, where the first session is corresponding to the first IP address, the first session is used to indicate the user plane network element to advertise first routing information, and a destination address of the first routing information is the first IP address.

In an embodiment, that the control plane network element sends the first session to the user plane network element includes: The control plane network element queries the control plane user table based on the authentication request, to obtain the first session corresponding to the first IP address; and the control plane network element sends the first session to the user plane network element. In other words, the control plane network element may determine whether the control plane user table includes the first session, to determine whether the first IP address has been authenticated. When the first IP address has been authenticated, step S404 is performed. It may be understood that, with reference to the foregoing content, if the user equipment 100 corresponding to the first IP address has sent a dialup request to any user plane network element managed by the control plane network element, and the dialup succeeds, the first session corresponding to the first IP address is stored in the control plane user table. Therefore, if the control plane user table includes the first session, it indicates that the user equipment 100 corresponding to the first IP address has sent the dialup request to the control plane network element, and the dialup succeeds. The control plane network element may send the first session to the user plane network element connected to the first IP address, so that the user plane network element may advertise first route details based on the first session.

In an embodiment, that the control plane network element sends the first session to the user plane network element includes: The control plane network element generates the first session corresponding to the first IP address based on the authentication request; and the control plane network element sends the first session to the user plane network element. It may be understood that, if the control plane user table does not include the first session, it indicates that the user equipment 100 corresponding to the first IP address has not sent the dialup request to the control plane network element, or has sent the dialup request, but the dialup fails. Therefore, in a specific implementation, if the control plane user table does not include the first session, the control plane network element may send the dialup request of the first IP address to the AAA for authentication. After the dialup succeeds, the first session may be generated based on a dialup success message returned by the AAA, stored in the control plane user table, and delivered to the user plane network element. Therefore, when receiving a packet whose source address is the first IP address again, the user plane network element may directly forward, based on the first session, the packet sent from the first IP address. There is no need repeatedly sending the authentication request to the control plane network element, and this improves packet forwarding efficiency and user experience.

In a specific implementation, the control plane network element directly generates the dialup request and interacts with the AAA 310. When the dialup succeeds, the control plane network element generates the first session, and delivers the first session to the user plane network element. Alternatively, the control plane network element may directly discard the packet without performing any processing. It should be understood that the foregoing examples are merely used for description, and are not specifically limited.

In an embodiment, the control plane network element may send the first route details to the user plane network element through the control interface 431 in the embodiment in FIG. 3. It may be understood that the control plane network element sends the first session corresponding to the first IP address to the user plane network element, so that when receiving the data packet sent by the user equipment again, the user plane network element can directly determine, based on the first session in the user plane user table of the user plane network element, whether the user equipment succeeds in dialup and whether the user equipment is in an authenticated state, and does not need to confirm the authenticated state of the user equipment again. This improves data packet transmission efficiency and user experience.

S405: The user plane network element advertises the first routing information based on the first session, where the destination address of the first routing information is the first IP address. It may be understood that after the user plane network element advertises the first routing information, when receiving a packet whose source IP address is the first IP address again, the user plane network element may directly forward the packet based on the first routing information. A specific implementation of how to route and forward a packet is not described in detail.

In an embodiment, after the user plane network element receives the first session from the control plane network element, the method further includes: The user plane network element stores the first session in the user plane user table, to obtain an updated user plane user table. It may be understood that, after the user plane user table is updated, when receiving a packet whose source IP address is the first IP address again, the user plane network element may directly determine, based on the first session, whether the user is authenticated, and forward the packet based on the first routing information in the first session. There is no need sending the authentication request to the control plane network element again. This improves packet forwarding efficiency and user experience.

In an embodiment, step S401 may be performed when the user equipment jumps between APs. In other words, that the user plane network element receives a packet includes: The user plane network element receives a packet sent by the user equipment through a network access point AP; or the user plane network element receives a packet sent by the user equipment through a router, where an IP address of the user equipment is the first IP address. In brief, in step S401, the user equipment is first connected to a second user plane network element through a second AP, and sends a dialup request to the second user plane network element through the second AP. After the dialup succeeds, the first session is stored in the control plane user table of the control plane network element in the network 400 and a user plane user table of the second user plane network element, and then the user equipment is disconnected from a first AP and connected to a first AP that is connected to a first user plane network element. Because the first session is not stored in a user plane user table of the first user plane network element, step S401 to step S405 are performed. The first user plane network element may obtain the first session of the user equipment from the control plane network element. In this period, the user equipment does not need to perform redialing. Therefore, a network disconnection does not occur in the entire process. In this way, in the layer 3 network, when maintaining a network connected state, the user equipment switches between a plurality of APs connected to different BNGs.

For example, as shown in FIG. 2, it is assumed that the user equipment 2 is connected to the AP 1 at a time point T0. An IP address of the user equipment 2 is X.X.X.X, and a dialup request is sent to the control plane network element 1 by using the user plane network element 1. After successfully performing dialup by using the AAA 310, the control plane network element 1 stores a session corresponding to X.X.X.X in the control plane user table, and sends the session corresponding to X.X.X.X to the user plane user table of the user plane network element 1. It is assumed that, at a time point T1, the user equipment 2 is disconnected from the AP 1 and is connected to the AP 2. In this case, the user plane network element 2 connected to the AP 2 does not store the session of X.X.X.X. Therefore, the user plane network element 2 cannot determine whether the user equipment corresponding to X.X.X.X is user equipment that has successfully dialed up. The user plane network element 2 may perform steps S401 to S405, to obtain the session of X.X.X.X from the control plane network element, so that the user equipment does not need to perform redialing after switching to the AP. This improves user experience.

In a specific implementation, a trigger condition for the user equipment to switch from the second AP to the first AP includes: The second user plane network element is faulty, or the user equipment is in a roaming state. For example, there are two access points in a wireless network of a shopping mall: an AP 1 in a north area and an AP 2 in a south area. After user equipment is connected to the AP 1 in the north area of the shopping mall and successfully performs dialup, the user equipment moves to the south area. After the user equipment is automatically connected to the AP 2, the user equipment is in a roaming state, and a user plane network element connected to the AP 2 can perform the foregoing step S401 to step S405, so that a user can continue to use the network without redialing. For another example, in the network system provided in this application, when the user plane network element 1 is faulty, a data packet sent by the user equipment may also be sent to the user plane network element 2 for processing, and the foregoing step S401 to step S405 are performed. In an entire failover process of switching to a user plane network element, a user does not need to perform redialing. This improves user experience. It should be understood that the foregoing examples are merely used for description, and do not constitute a specific limitation.

In an embodiment, after the control plane network element determines that the first IP address has been authenticated (in other words, the control plane user table includes the first session), the method further includes: The control plane network element sends an instruction for deleting the first session to the second user plane network element. The foregoing example is still used as an example. The user equipment is first connected to the second AP, and the second AP is connected to the second user plane network element. Therefore, the second user plane network element once stores the first session. However, the user equipment is connected to the first AP, and the first AP is connected to the first user plane network element. In other words, a data packet sent by the user equipment no longer needs to be processed by the second user plane network element. Therefore, in step S404, when sending the first session to the user plane network element, the control plane network element may send the instruction for deleting the first session to the second user plane network element. In this way, memory usage of the second user plane network element is reduced, and security of a user session can also be improved.

In an embodiment, the user plane network element may further receive a dialup request sent by the user equipment, and report the dialup request to the control plane network element after encapsulating the dialup request. In other words, the method further includes: The user plane network element sends a dialup request to the control plane network element, where the dialup request includes a second IP address; and when the dialup request succeeds, the user plane network element receives a second session from the control plane network element, where the second session is corresponding to the second IP address, and the second session is generated by the control plane network element in response to the dialup request, the user plane network element advertises second routing information based on the second session, where a destination address of the second routing information is the second IP address, and the user plane network element stores the second session in the user plane user table, to obtain an updated user plane user table; or when the dialup request fails, the user plane network element receives a failure message from the control plane network element, where the failure message is used to indicate that the dialup request fails.

FIG. 2 is still used as an example. An IP address of the user equipment 2 is X.X.X.X. After accessing the AP 1 for an initial time, the user equipment 2 may send a dialup request to the user plane network element 1 to request internet access. The user plane network element 1 may encapsulate the dialup request and report the dialup request to the control plane network element 1 through a service interface. The control plane network element 1 may confirm, to the AAA 310, whether dialup performed by the user equipment 2 succeeds. If the dialup succeeds, the control plane network element 1 may store, in the control plane user table, the IP address X.X.X.X of the user equipment 2 and a corresponding session, and deliver the session and a routing entry of X.X.X.X to the user plane network element 1. In this way, when receiving an authentication request of X.X.X.X sent by another user plane network element (for example, the user plane network element 2) again, the control plane network element 1 may directly deliver the session of the X.X.X.X to the user plane network element, and there is no need re-confirming, to the AAA 310, whether dialup performed by the user equipment 2 succeeds. This improves communication efficiency and user experience. It should be understood that the foregoing examples are merely used for description, and this is not specifically limited in this application.

It may be understood that, in the foregoing method, after the user equipment 100 sends a dialup request by using a user plane network element 410 in the network, and the dialup succeeds, the control plane user table 420 of the control plane network element 420 stores a session of the user equipment 100. Regardless of user planewhether the user equipment sends a data packet to any user plane network element 410 in the network, and even if a user plane user table of the user plane network element 410 that receives the data packet does not store a session of the user equipment, the user plane network element 410 that receives the data packet may obtain, from the control plane network element 420, the session corresponding to the user equipment 100, and a user does not need to perform redialing. Therefore, a network disconnection does not occur in the entire AP switching process. This ensures that in the layer 3 network in the OSI model, when maintaining the network connected state, the user equipment 100 switches between a plurality of APs connected to different BNGs, and improves user experience.

The methods in the embodiments of this application are described in detail above. For ease of better implementing the solutions in the embodiments of this application, correspondingly related devices used to cooperate in implementing the solutions are further provided below.

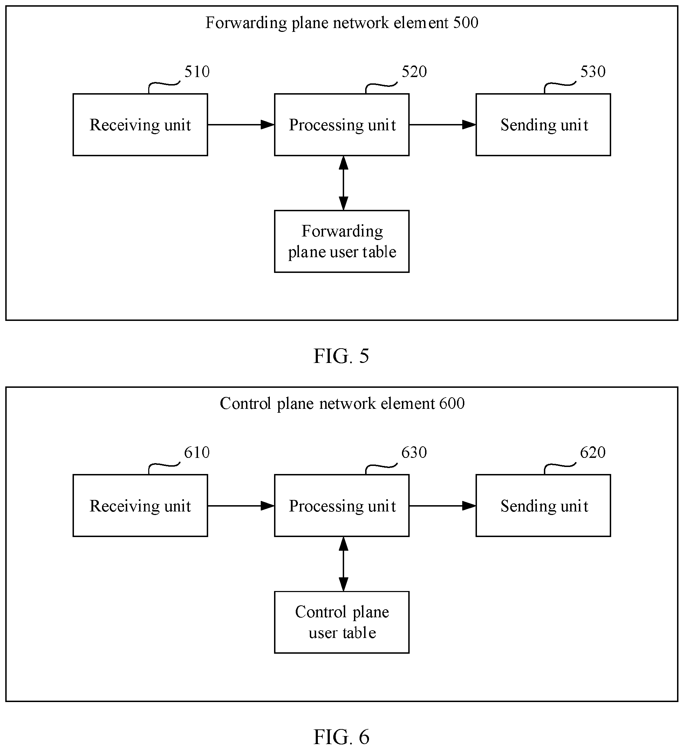

FIG. 5 is a schematic structural diagram of a user plane network element 500 according to this application. The user plane network element 500 may be the user plane network element 410 in the foregoing content. The user plane network element 500 is applied to a layer 3 network in an open systems interconnection OSI model. The network includes a control plane network element and a user plane network element that are connected to each other. The user plane network element 500 includes:
a receiving unit 510, where the receiving unit is configured to receive a packet, and a source IP address of the packet is a first IP address;
a processing unit 520, where the processing unit is configured to determine that the first IP address is not authenticated; and
a sending unit 530, where the sending unit is configured to send an authentication request to the control plane network element, and the authentication request includes the first IP address.

The receiving unit 510 is further configured to receive a first session from the control plane network element. The first session responds to the authentication request, and the first session is corresponding to the first IP address.

The sending unit 530 is further configured to advertise first routing information based on the first session. A destination address of the first routing information is the first IP address.

In an embodiment, the user plane network element 500 includes a user plane user table, and the user plane user table is used to store a session corresponding to an authenticated IP address. The processing unit 520 is further configured to determine that the user plane user table does not include the first session. The processing unit 520 is further configured to: after the receiving unit 510 receives the first session from the control plane network element, store the first session in the user plane user table, to obtain an updated user plane user table.

In an embodiment, the sending unit 530 is further configured to send a dialup request to the control plane network element, where the dialup request includes a second IP address. The receiving unit 510 is further configured to receive a second session from the control plane network element, where the second session is corresponding to the second IP address, and the second session is generated by the control plane network element in response to the dialup request. The sending unit 530 is further configured to advertise second routing information based on the second session, where a destination address of the second routing information is the second IP address. The processing unit 520 is further configured to store the second session in the user plane user table, to obtain an updated user plane user table. Alternatively, the receiving unit 510 is further configured to receive a failure message from the control plane network element, where the failure message is used to indicate that the dialup request fails.

In an embodiment, the control plane network element includes a control plane user table, and the control plane user table is used to store a session corresponding to an authenticated IP address. The receiving unit 510 is further configured to receive the first session from the control plane network element, where the first session is obtained by the control plane network element by querying the control plane user table based on the authentication request.

In an embodiment, the receiving unit 510 is further configured to receive the first session from the control plane network element, where the first session is generated by the control plane network element based on the authentication request.

In an embodiment, the receiving unit 510 is further configured to receive a packet sent by the user equipment through a network access point AP. Alternatively, the receiving unit 510 is further configured to receive a packet sent by the user equipment through a router. An IP address of the user equipment is the first IP address.

In an embodiment, the packet is a data packet.

It may be understood that, for the user plane network element, after the user equipment sends the dialup request by using a user plane network element in the network, and the dialup succeeds, the control plane user table of the control plane network element stores a session of the user equipment. Regardless of which user plane network element in the network does the user equipment sends a data packet to, and even if a user plane user table of a user plane network element that receives the data packet does not store a session of the user equipment, the user plane network element that receives the data packet may obtain, from the control plane network element, the session corresponding to the user equipment, and a user does not need to perform redialing. Therefore, a network disconnection does not occur in the entire AP switching process. This ensures that in the layer 3 network in the OSI model, when maintaining a network connected state, the user equipment switches between a plurality of APs connected to different BNGs, and improves user experience.

FIG. 6 is a schematic structural diagram of a control plane network element according to this application. The control plane network element 600 may be the control plane network element 420 in the foregoing content. The control plane network element 600 can be applied to a layer 3 network in an open systems interconnection OSI model. The network includes a control plane network element and a user plane network element that are connected to each other, and the control plane network element includes:
a receiving unit 610, where the receiving unit 610 is configured to receive an authentication request from the user plane network element, and the authentication request includes a first IP address; and
a sending unit 620, where the sending unit 620 is configured to send a first session to the user plane network element, the first session is corresponding to the first IP address, the first session is used to indicate the user plane network element to advertise first routing information, and a destination address of the first routing information is the first IP address.

In an embodiment, the control plane network element further includes a processing unit 630, the control plane network element includes a control plane user table, and the control plane user table is used to store a session corresponding to an authenticated IP address. The processing unit 630 is configured to query the control plane user table based on the authentication request, to obtain the first session corresponding to the first IP address. The sending unit 620 is further configured to send the first session to the user plane network element.

In an embodiment, the processing unit 630 is further configured to generate, based on the authentication request, the first session corresponding to the first IP address. The sending unit 620 is further configured to send the first session to the user plane network element.

In an embodiment, the receiving unit 610 is further configured to receive a dialup request from the user plane network element, where the dialup request includes a second IP address. The sending unit 620 is further configured to send a second session to the user plane network element, where the second session is corresponding to the second IP address, the second session is used to indicate the user plane network element to advertise second routing information, a destination address of the second routing information is the second IP address, and the second session is further used to indicate the user plane network element to store the second session in the user plane user table, to obtain an updated user plane user table. The processing unit 630 is further configured to store the second session in the control plane user table, to obtain an updated control plane user table. Alternatively, the sending unit 620 is further configured to send a failure message to the user plane network element, where the failure message is used to indicate that the dialup request fails.

It may be understood that, for the control plane network element, after the user equipment sends the dialup request by using a user plane network element in the network, and the dialup succeeds, the control plane user table of the control plane network element stores a session of the user equipment. Regardless of which user plane network element in the network does the user equipment sends a data packet to, and even if a user plane user table of a user plane network element that receives the data packet does not store a session of the user equipment, the user plane network element that receives the data packet may obtain, from the control plane network element, the session corresponding to the user equipment, and a user does not need to perform redialing. Therefore, a network disconnection does not occur in the entire AP switching process. This ensures that in the layer 3 network in the OSI model, when maintaining a network connected state, the user equipment switches between a plurality of APs connected to different BNGs, and improves user experience.

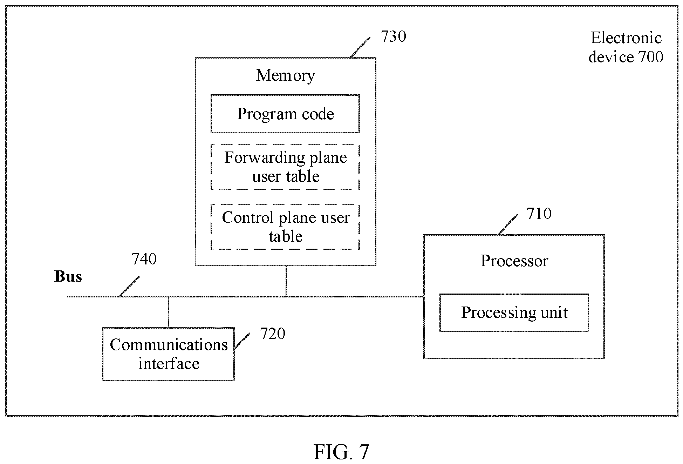

FIG. 7 is a schematic structural diagram of an electronic device 700 according to an embodiment of this application. The electronic device 700 may be the user plane network element or the control plane network element in the foregoing content. As shown in FIG. 7, the electronic device 700 includes a processor 710, a communications interface 720, a memory 730, and a bus 740. The processor 710, the communications interface 720, and the memory 730 may be connected to each other through the internal bus 740, or may implement communication in another manner, for example, wireless transmission. In this embodiment of this application, an example in which the bus 740 is used for connection is used. The bus 740 may be a peripheral component interconnect (Peripheral Component Interconnect, PCI) bus, an extended industry standard architecture (Extended Industry Standard Architecture, EISA) bus, or the like. The bus 740 may be classified into an address bus, a data bus, a control bus, and the like. For ease of representation, only one thick line is used to represent the bus in FIG. 7, but this does not mean that there is only one bus or only one type of bus.

The processor 710 may include one or more general purpose processors, for example, a central processing unit (Central Processing Unit, CPU), or a combination of a CPU and a hardware chip. The hardware chip may be an application-specific integrated circuit (Application-Specific Inegrated Circuit, ASIC), a programmable logic device (Programmable Logic Device, PLD), or a combination thereof. The PLD may be a complex programmable logic device (Complex Programmable Logic Device, CPLD), a field programmable gate array (Field-Programmable Gate Array, FPGA), generic array logic (Generic Array Logic, GAL), or any combination thereof. The processor 710 executes various types of digital storage instructions, for example, software or firmware programs stored in the memory 730. The processor 710 can enable the electronic device 700 to provide a relatively wide variety of services.

When the electronic device 700 is the control plane network element in the foregoing content, the processor 710 may include a processing unit. The processing unit may invoke program code in the memory 730 to implement a processing function, including the function of the processing unit 630 described in FIG. 6, for example, determining to query the control plane user table, determining that the first IP address has been authenticated, and the like. Specifically, the processing unit may be configured to perform step S403 and step S404 in the foregoing method and other optional steps of the method, and may be further configured to perform other steps described in the embodiments in FIG. 2 to FIG. 4. Details are not described herein again.

When the electronic device 700 is the user plane network element in the foregoing content, the processor 710 may include a processing unit. The processing unit may invoke program code in the memory 730 to implement a processing function, including the function of the processing unit 520 described in FIG. 5, for example, querying the user plane user table, determining that the first IP address is not authenticated, and the like. Specifically, the processing unit may be configured to perform step S401, step S402, step S405, and optional steps of the foregoing method, and may be further configured to perform other steps described in the embodiments in FIG. 2 to FIG. 4. Details are not described herein again.

The memory 730 may include a volatile memory (Volatile Memory), for example, a random access memory (Random Access Memory, RAM). The memory 730 may also include a non-volatile memory (Non-Volatile Memory), for example, a read-only memory (Read-Only Memory, ROM), a flash memory (Flash Memory), a hard disk drive (Hard Disk Drive, HDD), or a solid-state drive (Solid-State Drive, SSD). The memory 730 may further include a combination of the foregoing types of memories.

When the electronic device 700 is the control plane network element in the foregoing content, the memory 730 may store the control plane user tables in the embodiments in FIG. 3 and FIG. 4. The control plane user table is used to store a session corresponding to an authenticated IP address. The memory 730 may further store program code. The program code may be code for determining that the first IP address has been authenticated, code for processing the dialup request, or the like, and may further include other program code used to perform other steps described in the embodiments in FIG. 2 to FIG. 4. Details are not described herein again.

When the electronic device 700 is the user plane network element in the foregoing content, the memory 730 may store user plane user tables in the embodiments in FIG. 3 and FIG. 4. The user plane user table is used to store a session corresponding to an authenticated IP address. The memory 730 may further store program code. The program code may be code for determining that the first IP address is not authenticated, code for generating the authentication request based on a received packet, or the like, and may further include other program code used to perform other steps described in the embodiments in FIG. 2 to FIG. 4. Details are not described herein again.

The communications interface 720 may be a wired interface (for example, an Ethernet interface), an internal interface (for example, a Peripheral Component Interconnect express (Peripheral Component Interconnect express, PCIe) interface), a wired interface (for example, an Ethernet interface), or a wireless interface (for example, a cellular network interface or a wireless local area network interface). The communications interface 720 is configured to communicate with another device or module.

It should be noted that FIG. 7 is merely a possible implementation of the embodiments of this application. In actual application, the electronic device may further include more or fewer components. This is not limited herein. For content that is not shown or not described in this embodiment of this application, refer to related descriptions in the embodiments in FIG. 2 to FIG. 6. Details are not described herein again.

It should be understood that the electronic device shown in FIG. 7 may alternatively be a computer cluster including a plurality of servers. This is not specifically limited in this application.

An embodiment of this application further provides a computer-readable storage medium. The computer-readable storage medium stores an instruction. When the instruction is run on a processor, the method procedures shown in FIG. 2 to FIG. 6 are implemented.

An embodiment of this application further provides a computer program product. When the computer program product is run on a processor, the method procedures shown in FIG. 2 to FIG. 6 are implemented.

All or some of the foregoing embodiments may be implemented by software, hardware, firmware, or any combination thereof. When software is used to implement the embodiments, all or some of the foregoing embodiments may be implemented in a form of a computer program product. The computer program product includes one or more computer instructions. When the computer program instructions are loaded or executed on a computer, the procedure or functions according to the embodiments of the present invention are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (Digital Video Disc, DVD)), or a semiconductor medium. The semiconductor medium may be an SSD.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for advertising a route, applied to a layer 3 network in an open systems interconnection OSI model, wherein the network comprises a control plane network element and a user plane network element that are connected to each other, and the method comprises:
receiving, by the user plane network element, a packet, wherein a source IP address of the packet is a first IP address;
determining, by the user plane network element, that the first IP address is not authenticated;
sending, by the user plane network element, an authentication request to the control plane network element, wherein the authentication request comprises the first IP address;
receiving, by the user plane network element, a first session from the control plane network element, wherein the first session responds to the authentication request, and the first session is corresponding to the first IP address; and
advertising, by the user plane network element, first routing information based on the first session, wherein a destination address of the first routing information is the first IP address.

2. The method according to claim 1, wherein the user plane network element comprises a user plane user table, and the user plane user table is used to store a session corresponding to an authenticated IP address;
the determining, by the user plane network element, that the first IP address is not authenticated comprises:
determining, by the user plane network element, that the user plane user table does not comprise the first session; and
after the receiving, by the user plane network element, a first session from the control plane network element, the method further comprises:
storing, by the user plane network element, the first session in the user plane user table, to obtain an updated user plane user table.

3. The method according to claim 2, wherein the method further comprises:
sending, by the user plane network element, a dialup request to the control plane network element, wherein the dialup request comprises a second IP address; and
when the dialup request succeeds, receiving, by the user plane network element, a second session from the control plane network element, wherein the second session is corresponding to the second IP address, and the second session is generated by the control plane network element in response to the dialup request,
advertising, by the user plane network element, second routing information based on the second session, wherein a destination address of the second routing information is the second IP address, and
storing, by the user plane network element, the second session in the user plane user table, to obtain an updated user plane user table; or
when the dialup request fails, receiving, by the user plane network element, a failure message from the control plane network element, wherein the failure message is used to indicate that the dialup request fails.

4. The method according to any one of claims 1 to 3, wherein the control plane network element comprises a control plane user table, and the control plane user table is used to store a session corresponding to an authenticated IP address; and
the receiving, by the user plane network element, a first session from the control plane network element comprises:
receiving, by the user plane network element, the first session from the control plane network element, wherein the first session is obtained by the control plane network element by querying the control plane user table based on the authentication request.

5. The method according to any one of claims 1 to 3, wherein
the receiving, by the user plane network element, a first session from the control plane network element comprises:
receiving, by the user plane network element, the first session from the control plane network element, wherein the first session is generated by the control plane network element based on the authentication request.

6. The method according to any one of claims 1 to 5, wherein
the receiving, by the user plane network element, a packet comprises:
receiving, by the user plane network element, a packet sent by the user equipment through a network access point AP; or
receiving, by the user plane network element, a packet sent by the user equipment through a router, wherein an IP address of the user equipment is the first IP address.

7. The method according to any one of claims 1 to 6, wherein the packet is a data packet.

8. A method for advertising a route, applied to a layer 3 network in an open systems interconnection OSI model, wherein the network comprises a control plane network element and a user plane network element that are connected to each other, and the method comprises:
receiving, by the control plane network element, an authentication request from the user plane network element, wherein the authentication request comprises a first IP address; and
sending, by the control plane network element, a first session to the user plane network element, wherein the first session is corresponding to the first IP address, the first session is used to indicate the user plane network element to advertise first routing information, and a destination address of the first routing information is the first IP address.

9. The method according to claim 8, wherein the control plane network element comprises a control plane user table, and the control plane user table is used to store a session corresponding to an authenticated IP address; and the sending, by the control plane network element, a first session to the user plane network element comprises:
querying, by the control plane network element, the control plane user table based on the authentication request, to obtain the first session corresponding to the first IP address; and
sending, by the control plane network element, the first session to the user plane network element.

10. The method according to claim 8, wherein the sending, by the control plane network element, a first session to the user plane network element comprises:
generating, by the control plane network element, the first session corresponding to the first IP address; and
sending, by the control plane network element, the first session to the user plane network element.

11. The method according to any one of claims 8 to 10, wherein the user plane network element comprises a user plane user table, and the user plane user table is used to store a session corresponding to an authenticated IP address; and
the first session is further used to indicate the user plane network element to store the first session in the user plane user table, to obtain an updated user plane user table.

12. The method according to claim 11, wherein the method further comprises:
receiving, by the control plane network element, a dialup request from the user plane network element, wherein the dialup request comprises a second IP address; and
when the dialup request succeeds, sending, by the control plane network element, a second session to the user plane network element, wherein the second session is corresponding to the second IP address, the second session is used to indicate the user plane network element to advertise second routing information, a destination address of the second routing information is the second IP address, and the second session is further used to indicate the user plane network element to store the second session in the user plane user table, to obtain an updated user plane user table, storing, by the control plane network element, the second session in the control plane user table, to obtain an updated control plane user table; or
when the dialup request fails, sending, by the control plane network element, a failure message to the user plane network element, wherein the failure message is used to indicate that the dialup request fails.

13. The method according to any one of claims 8 to 12, wherein the packet is a packet sent by user equipment to the user plane network element through a network access point AP, or the packet is a packet sent by the user equipment to the user plane network element through a router, wherein an IP address of the user equipment is the first IP address.

14. The method according to any one of claims 8 to 13, wherein the packet is a data packet.

15. A user plane network element, applied to a layer 3 network in an open systems interconnection OSI model, wherein the network comprises a control plane network element and the user plane network element that are connected to each other, and the user plane network element comprises:
a receiving unit, configured to receive a packet, wherein a source IP address of the packet is a first IP address;
a processing unit, configured to determine that the first IP address is not authenticated; and
a sending unit, configured to send an authentication request to the control plane network element, wherein the authentication request comprises the first IP address; wherein
the receiving unit is further configured to receive a first session from the control plane network element, the first session responds to the authentication request, and the first session is corresponding to the first IP address; and
the sending unit is further configured to advertise first routing information based on the first session, and a destination address of the first routing information is the first IP address.

16. The user plane network element according to claim 15, wherein the user plane network element comprises a user plane user table, and the user plane user table is used to store a session corresponding to an authenticated IP address;
the processing unit is further configured to determine that the user plane user table does not comprise the first session; and
the processing unit is further configured to: after the receiving unit receives the first session from the control plane network element, store the first session in the user plane user table, to obtain an updated user plane user table.

17. The user plane network element according to claim 16, wherein the sending unit is further configured to send a dialup request to the control plane network element, wherein the dialup request comprises a second IP address; and
the receiving unit is further configured to receive a second session from the control plane network element, wherein the second session is corresponding to the second IP address, and the second session is generated by the control plane network element in response to the dialup request,
the sending unit is further configured to advertise second routing information based on the second session, wherein a destination address of the second routing information is the second IP address, and
the processing unit is further configured to store the second session in the user plane user table, to obtain an updated user plane user table; or
the receiving unit is further configured to receive a failure message from the control plane network element, wherein the failure message is used to indicate that the dialup request fails.

18. The user plane network element according to any one of claims 15 to 17, wherein the control plane network element comprises a control plane user table, and the control plane user table is used to store a session corresponding to an authenticated IP address; and
the receiving unit is further configured to receive the first session from the control plane network element, wherein the first session is obtained by the control plane network element by querying the control plane user table based on the authentication request.

19. The user plane network element according to claim 18, wherein
the receiving unit is further configured to receive the first session from the control plane network element, wherein the first session is generated by the control plane network element based on the authentication request.

20. A control plane network element, applied to a layer 3 network in an open systems interconnection OSI model, wherein the network comprises the control plane network element and a user plane network element that are connected to each other, and the control plane network element comprises:
a receiving unit, configured to receive an authentication request from the user plane network element, wherein the authentication request comprises a first IP address; and
a sending unit, configured to send a first session to the user plane network element, wherein the first session is corresponding to the first IP address, the first session is used to indicate the user plane network element to advertise first routing information, and a destination address of the first routing information is the first IP address.

21. The control plane network element according to claim 20, wherein the control plane network element further comprises a processing unit, the control plane network element comprises a control plane user table, and the control plane user table is used to store a session corresponding to an authenticated IP address;
the processing unit is configured to query the control plane user table based on the authentication request, to obtain the first session corresponding to the first IP address; and
the sending unit is further configured to send the first session to the user plane network element.

22. The control plane network element according to claim 20 or 21, wherein
the processing unit is further configured to generate the first session corresponding to the first IP address; and
the sending unit is further configured to send the first session to the user plane network element.

23. The control plane network element according to claim 22, wherein
the receiving unit is further configured to receive a dialup request from the user plane network element, wherein the dialup request comprises a second IP address; and
the sending unit is further configured to send a second session to the user plane network element, wherein the second session is corresponding to the second IP address, the second session is used to indicate the user plane network element to advertise second routing information, a destination address of the second routing information is the second IP address, and the second session is further used to indicate the user plane network element to store the second session in the user plane user table, to obtain an updated user plane user table, and
the processing unit is further configured to store the second session in the control plane user table, to obtain an updated control plane user table; or
the sending unit is further configured to send a failure message to the user plane network element, wherein the failure message is used to indicate that the dialup request fails.

24. A network system, applied to a layer 3 network in an open systems interconnection OSI model, wherein the network system comprises a control plane network element and a user plane network element that are connected to each other, the control plane network element performs the method according to any one of claims 8 to 14, and the user plane network element is configured to perform the method according to any one of claims 1 to 7.

25. A computer-readable storage medium, comprising instructions, wherein when the instructions are run on a computing device, the computing device is enabled to perform the method according to any one of claims 1 to 7 or the method according to any one of claims 8 to 14.

26. An electronic device, comprising a processor and a memory, wherein the processor executes code in the memory to perform the method according to any one of claims 1 to 7 or the method according to any one of claims 8 to 14.
